# EUROPEAN PATENT APPLICATION

(11) **EP 1 804 435 A1**
(43) Date of publication of application: **04.07.2007**
(21) Application number: 05301126.8
(22) Date of filing: 30.12.2005
(51) Int. Cl.: H04L 12/56, H04Q 7/38

(54) **A method for service delivery in a mobile communication system**

(71) Applicant: Alcatel Lucent, 75008 Paris (FR)
(72) Inventor: Drevon, Nicolas, 75016, PARIS (FR); Thiebaut, Laurent, 92160, ANTONY (FR)
(74) Representative: El Manouni, Josiane

(57) **Abstract**

One object of the present invention is a method for service delivery in a mobile communication system wherein incoming mobile services can be delivered either via high fee mobile access or via low fee mobile or fixed access, said method comprising the steps of :
- associating at least two phone numbers to an user having a single subscription for high fee and low fee mobile access, including a fixed service phone number, for which a calling party is charged with fixed network fees, and a mobile service phone number, for which a calling party is charged with mobile network fees,
- defining specific mobility states wherein an incoming call or session targeted at a fixed service number can be routed according to mobile routing procedures,
- upon handling an incoming call or session, targeted at a "fixed service" phone number, determining the current mobility state of the called party, and
- if said current mobility state corresponds to one of said specific mobility states, routing said call or session to the called party according to mobile routing procedures,
- if said current mobility state does not correspond to one of said specific mobility states, rejecting said call or session, or providing a service in replacement which does not need routing said call or session according to mobile routing procedures.

## Description

The present invention generally relates to mobile communication systems. In a general way, mobile communication systems are subject to standardisation; therefore details on such systems can be found in the corresponding standards, published by the corresponding standardisation bodies.

The present invention more particularly relates to the evolution of such systems towards fixed-mobile convergence.

An example of such evolution corresponds to the introduction, in a mobile network wherein mobile services are delivered via higher fee licensed mobile access (such as for example via the Radio Access Network of 3GPP (3rd Generation Partnership Program) or via the Radio Access Network of 3GPP2 (3rd Generation Partnership Program 2), of technologies enabling the delivery of said mobile services also via lower fee mobile access.

This lower fee mobile access relies on mobile terminal exchanging traffic with the network through IP flows sent over radio protocols allowing unlicensed radio access such as WiFi, Bluetooth, WiMax, ...etc. An example of these technologies is UMA/GAN (Unlicensed Mobile Access / Generic Access Network) defined by 3gpp.

Hereinafter, terms such as high fee, licensed, or cellular, will be used indifferently to refer to such mobile access using mobile network (such as Radio Access Network of 3GPP or 3GPP2 for example), and terms such as low fee, or unlicensed, will be used indifferently to refer to such mobile access using fixed network (such as UMA/GAN for example).

UMA/GAN will be considered more particularly in the following, as an example of such technologies enabling the delivery of mobile services via low fee mobile or fixed access.

Briefly, UMA/GAN is an access technology allowing a dual mode (GSM /UMTS, Wifi / Bluetooth / Wimax / ...) Mobile Station to benefit from services of a mobile network when it is under Wifi / Bluetooth / Wimax / ... coverage. This means that through UMA/GAN technology the mobile station accesses via Wifi / Bluetooth /Wimax / ... to Core Network entities of the mobile network, and benefits from services delivered by those entities. Such services are thus delivered at a cheaper cost (no usage of expensive 2G/3G radio) and also in places where it is costly for the operator to deploy adequate licensed mobile access coverage (e.g. deep in-door).

More details on UMA/GAN can be found in the corresponding standards, published by the corresponding standardisation bodies.

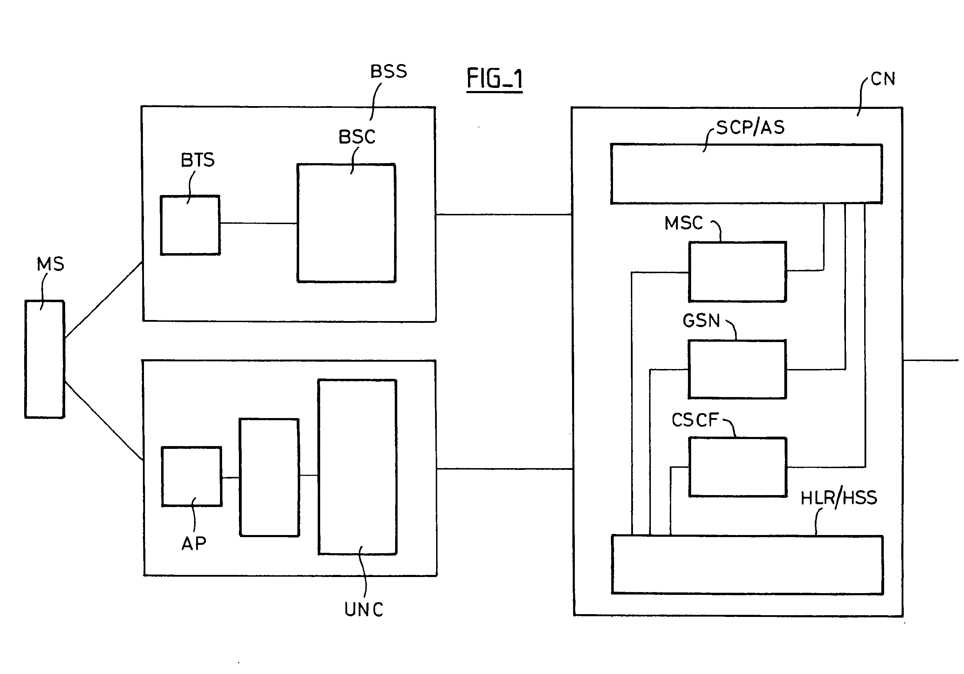

An example of architecture of a mobile communication system including licensed and unlicensed mobile access is recalled in figure 1. The system comprises :
- Mobile Stations,
- a Radio Access Network (RAN), or Base Station Subsystem (BSS) / Radio Network Subsystem (RNS) , in turn comprising Base Station Transceivers (BTS) /NodeB and Base Station Controllers (BSC) /Radio Network Controllers (RNC) ,
- an UMA/GAN network comprising one or more access points (AP) and one or more UMA Network Controllers (UNC) / Generic Access Controllers (GANC) appearing to the CN as a BSS, interconnected through a broadband IP network,
- a Core Network (CN), in turn comprising entities like Mobile Switching Centers (MSC) for Circuit Switched domain, and/or GPRS Support Nodes (GSN) for Packet Switched domain, and/or Call Session Control Functions (CSCF) for IP Multimedia Subsystem (IMS), said entities enabling the delivery of basic mobile services, and interacting with other entities such as Service Control Point (SCP) for CS and PS domain and/or Application Server (AS) for IMS subsystem, for the delivery of value-added mobile services, as well as with other entities such as a subscriber database such as Home Location Register (HLR) and/or Home Subscriber Server (HSS) storing user-related data needed for providing the services.

A very interesting feature in such systems is to allow the end user to have a single dual mode phone and joint service (i.e. a single subscription) for both licensed and unlicensed access, in countries where regulation allows such joint service.

For the end-user, owning such a "dual mode phone/subscription" has in particular the following advantages:
- Having the possibility to be provided with both fixed and mobile telephone services on a single phone, the fixed service being delivered on top of lower fee mobile access such as unlicensed (UMA/GAN) radio
- Having one single address book, log of calls being sent / received on the phone regardless of whether this is through lower fee mobile access such as unlicensed (UMA/GAN) or higher fee mobile access such as licensed (GSM/UMTS) mobile access;
- Having one single voice mail;
- It is cheaper to have one combined "dual mode" phone than 2 phones (one for unlicensed and one for licensed mobile access);
- Through UMA/GAN, all mobile services including SMS, MMS,... are naturally provided on lower fee mobile access such as unlicensed access;
- UMA/GAN provides hand-over (seamless service continuity) between unlicensed (such as Wifi or Bluetooth) and licensed (such as GSM or UMTS) coverage.

A single phone number could of course be associated with such "dual mode phone/subscription". However, as recognized by the present invention, for countries (such as in particular in Europe) where the calling party pays a different fee depending on whether the called party is reachable through a fixed phone number or through a mobile phone number, a single phone number raises a problem for the charging of the calling party, as the calling network does not know in advance whether the called party will be reached via fixed (lower fee) or mobile (higher fee) access network, as the "dual mode phone" may move back and forth between both accesses.

As further recognized by the present invention, a solution to this problem could be to associate a "dual mode phone/subscription" with a single mobile MSISDN (Mobile Subscriber ISDN Number) phone number independently from which access network the mobile is reachable through. Thus the party calling an user with a "dual mode phone/subscription" would always pay for the specific charges due to mobile access network, regardless of whether the called party is reachable via a fixed (unlicensed) access network or a mobile (licensed) access network. However, a drawback is that the owner of such a "dual mode phone/subscription" would impose that his/her correspondent always pays a high fee to reach him/her, which might not be socially acceptable. Most of the time, the calling party might prefer to first try a "fixed" phone number to reach the called party at home with a low fee, the "mobile" phone number being otherwise used to reach the called party everywhere (outside home or at home) but with a higher fee.

As further recognized by the present invention, another solution to this problem could be to associate a "dual mode phone/subscription" with a single fixed phone number independently from which access network the mobile is reachable through. As this number would belong to a fixed range, the calling party would never pay for the specific charges due to mobile access, even if the called party is reached via the mobile (licensed) access network. The extra cost when the owner of "dual mode phone" is reachable via the mobile access network would have to be paid by the owner of "dual mode phone" himself/herself. This is a change of charging model compared to the charging model used in some parts of the world such as Europe, the called party paying for its mobility, which might not be socially acceptable.

The present invention in particular enables to solve part or all of the above-mentioned problems, or to avoid part or all of the above-mentioned drawbacks. More generally, the present invention enables to improve service delivery in such systems.

These and other objects are achieved, in one aspect of the present invention, by a method for service delivery in a mobile communication system wherein incoming mobile services can be delivered either via high fee mobile access or via low fee mobile or fixed access , said method comprising a step of :
- associating at least two phone numbers to an user having a single subscription and common phone(s) for high fee mobile and low fee mobile or fixed access, including a fixed service phone number, for which a calling party is charged with fixed network fees, and a mobile service phone number, for which a calling party is charged with mobile network fees.

Advantageously, said method comprises a step of:
- upon handling an incoming call or session, targeted at a fixed service phone number, routing said call or session based on subscription policies to the called party according to mobile routing procedures.

Advantageously, according to an example of said subscription policies, said method comprises the steps of :
- defining specific mobility states wherein an incoming call or session targeted at a fixed service number can be routed according to mobile routing procedures,
- upon handling an incoming call or session, targeted at a fixed service phone number, determining the current mobility state of the called party, and
- if said current mobility state corresponds to one of said specific mobility states, routing said call or session to the called party according to mobile routing procedures,
- if said current mobility state does not correspond to one of said specific mobility states, rejecting said call or session, or providing a service in replacement which does not need routing said call or session according to mobile routing procedures.

Advantageously, said step of routing according to mobile routing procedures comprises the step of:
- forwarding said call to said mobile service number,

Advantageously, said method further comprises, for an user already having a fixed phone number for fixed access:
- a step of associating said fixed service phone number to said fixed phone number, by number portability,
- a step of, upon the reception of an incoming call or session targeted at said fixed number, porting said fixed phone number onto said fixed service phone number.

Advantageously, said method comprises a step of:
- upon handling an outgoing call or session issued by an user having a single subscription for high fee and low fee mobile or fixed access, routing said call or session to the called party based on subscription policies according to fixed network fees.

Advantageously, according to an example of said subscription policies, said method comprises the steps of:
- defining specific mobility states wherein an outgoing call or session can be routed according to fixed network fees,
- upon handling an outgoing call or session, determining the current mobility state of the calling party, and,
- if said current mobility state corresponds to one of said specific mobility states, routing said call or session to the called party according to fixed network fees,
- if said current mobility state does not correspond to one of said specific mobility states, routing said call or session to the called party according to mobile network fees.

Advantageously, said specific mobility states include at least one of the following states:
- a state where the user is known by the network as reachable through or registered on an area defined as Home low fee area,
- a state where the user has been de-registered from a Home low fee area, for less than a predetermined time,
- a state where the user is known by the network as reachable only through the high fee mobile access network, but in an area considered as equivalent to the Home low fee area in which the user was previously registered in the low fee mobile access network.

In an example, said step of determining a current user's mobility state includes interrogating a subscriber database storing user location related data.

In another example, said step of determining a current user's mobility state includes using Location Services to determine user location.

Advantageously, Location Services are used only when
- the user is known as not being anymore reachable on a Home low fee area for more than a predetermined time,
- and has not been detected reachable through the high fee mobile access network in an area considered as out of the Home low fee area in which the user was previously registered in the low fee mobile access network.

These and other objects are achieved, in another aspect of the present invention, by a core network entity of a mobile communication system wherein mobile services can be delivered either via high fee mobile access or via low fee mobile or fixed access, wherein, at least two phone numbers being associated to an user having a single subscription and common phone(s) for high fee and low fee mobile access, including a fixed service phone number, for which a calling party is charged with fixed network fees, and a mobile service phone number, for which a calling party is charged with mobile network fees, said core network entity comprises:
- means for, upon handling an incoming call or session, targeted at a fixed service phone number, routing said call or session based on subscription policies to the called party according to mobile routing procedures.

Advantageously, according to an example of said subscription policies, specific mobility states being defined wherein an incoming call or session targeted at a fixed service number can be routed according to mobile routing procedures, said core network entity comprises:
- means for, upon handling an incoming call or session, targeted at a fixed service phone number, determining the current mobility state of the called party,
- means for, if said current mobility state corresponds to one of said specific mobility states, routing said call or session to the called party according to mobile routing procedures,
- means for, if said current mobility state does not correspond to one of said specific mobility states, rejecting said call or session, or providing a service in replacement which does not need routing said call or session according to mobile routing procedures.

Advantageously, said means for routing according to mobile routing procedures comprise :
- means for forwarding said call to said mobile service phone number.

Advantageously, said core network entity comprises, for an user already having a fixed phone number for fixed access:
- means for associating said fixed service phone number to said fixed phone number, by number portability,
- means for, upon the reception of an incoming call or session targeted at said fixed phone number, porting said fixed phone number onto said fixed service phone number.

Advantageously, said entity comprises:
- means for, upon handling an outgoing call or session issued by an user having a single subscription for high fee and low fee mobile or fixed access, routing said call or session to the called party based on subscription policies according to fixed network fees.

Advantageously, according to an example of said subscription policies, specific mobility states being defined wherein an outgoing call or session can be routed according to fixed network fees, said entity comprises :
- means for, upon handling an outgoing, call or session, determining the current mobility state of the calling party, and,
- means for, if said current mobility state corresponds to one of said specific mobility states, routing said call or session to the called party according to fixed network fees,
- means for, if said current mobility state does not correspond to one of said specific mobility states, routing said call or session to the called party according to mobile network fees.

Advantageously, said predetermined mobility states include at least one of the following states:
- a state where the user is known by the network as reachable through or registered on an area defined as Home low fee area,
- a state where the user has been de-registered from a Home low fee area, for less than a predetermined time,
- a state where the user is known by the network as reachable only through the high fee cellular mobile access network, but in an area considered as equivalent to the Home low fee area in which the user was previously registered in the low fee mobile access network.

In an example, said means for determining a current user's mobility state include means for interrogating a subscriber database storing user location related data.

In another example, said means for determining a current user's mobility state include means for using Location Services to determine user location.

Advantageously, said means for using Location Services to determine user location comprise means for using Location Services only when :
- the user is known as not being anymore reachable on a Home low fee area for more than a predetermined time,
- and has not been detected reachable through the high fee mobile access network in an area considered as out of the Home low fee area in which the user was previously registered in the low fee mobile access network.

These and other objects of the present invention will become more apparent from the following description taken in conjunction with the accompanying drawings:
- figure 1 is intended to recall an example of architecture of a mobile communication system including licensed and unlicensed mobile access,
- figure 2 is intended to illustrate an example of a method according to the present invention, for the routing of an incoming call or session targeted at a "fixed service" phone number.

The present invention may also be explained as follows, for example considering the case of low fee mobile access using UMA/GAN technology, for illustration purposes.

In one of its different aspects, the present invention proposes to associate a single "dual mode phone/subscription", not with a single phone number, but with two kinds of phone numbers:
- one "fixed service" phone number (or set of numbers) which is to be used in a fixed network context i.e. only when the user is "at home" ( e.g. UMA/GAN coverage at Home). The calling party pays a fixed network fee when calling this kind of number ("fixed service of dual mode phone"). Calls targeted at this kind of number are anyhow routed towards the mobile network. When the mobile network receives a call with this kind of number and the called party is not "at Home" the call is rejected (or for example forwarded to the voice-mail of the called party),
- one "mobile service" phone number (or set of numbers) which is to be used in a mobile context, i.e. when the user is not "at home". The calling party pays a mobile network fee when calling this kind of number. This kind of call is routed per normal mobile procedures.

Calls to "fixed service of dual mode phone" are to be delivered to the user only when the "dual mode phone" of the user is "at home", i.e. under "Home unlicensed locations".

To define when the user is "at home", a "dual mode phone/subscription" can for example be associated with:
- a set of "Home low fee area" e.g. a set of "Home" Wifi or Wimax Access Point (AP), i.e. when an user is connected via one of these AP, the user is considered to be "at home". There may be more than one such AP (e.g. one AP for main house, another AP for secondary (holiday) house), this being the object of commercial agreement between operator and user.
- a set of "Home" mobile phone (e.g. GSM) cells where the user is considered "at Home" (if the operator wants to ensure that if the user is e.g. in his garden but out of reach of his/her Wifi AP, the user is anyhow considered "at home", this being the object of commercial agreement between operator and user).

It should be noted that such a definition of when a user is "at home" can also be used for other usage than the routing of incoming calls, such as for example for providing a specific tariff when the user issues an outgoing call from "home".

Upon arrival of an incoming call targeted at the "fixed service" phone number of a "dual mode phone/subscription", there is a need to determine whether the call should be forwarded to the target terminal (user is "at Home") or not (user is not "at Home").

A solution to such determination could be to issue a Location Request, i.e. to use Location Services, upon handling each incoming call.

However, in another of its different aspects, the present invention proposes another solution which avoids (when possible) issuing a Location Request to determine the actual location of the user, as such Location Request upon handling each incoming call would consume too many processing resources.

According to this solution, the handling of an incoming call targeted at the "fixed service" phone number of a "dual mode phone/subscription" involves looking up a "presence" database which tracks whether the user is in a «Home unlicensed area" (i.e. a location declared as being Home for the user) or outside. Based on this lookup an incoming call targeted at the "fixed service" phone number of a "dual mode phone/subscription" is either forwarded to the "mobile service" phone number of this user (i.e. sent to the user) or requires a Location Request to determine if anyhow the call is to delivered or rejected (as the user is "not at home").

This "presence" database could be e.g. an "UMA/GAN database" where the UNC/GANC keeps track of the location of the user.

Calls towards a "fixed service" phone number of a "dual mode phone/subscription" have to be directed to the network of the mobile operator and have thus to belong to an addressing range whose routing causes the call to be routed towards the mobile operator providing this service.

According to another aspect of the present invention, to avoid that users having subscribed to a "dual mode phone/subscription" have to change their fixed phone number, it is proposed that such users keep their current fixed phone number but that this number is considered as "ported" (via Number Portability functions) onto the "fixed service" number of the "dual mode phone/subscription". Such Number Portability functions may be classical and therefore do not need to be more fully disclosed in the present description.

Both "fixed service" phone number and "mobile service" phone number are advantageously associated with user-related data in the HLR-HSS or subscriber database. This ensures that it is possible to trigger service control (e.g. CAMEL T-CSI) for calls targeted at a "fixed service" phone number.

When the mobile network receives a call targeted at "fixed service of dual mode phone", to avoid issuing a Location Request to know whether the called party is within his/her "Home locations", an algorithm such as the following one could be considered:
- When the user connects onto the UNC or registers in the UMA/GAN network, the UNC/GANC updates an "UMA/GAN database" with "current UMA/GAN location information" about the user (containing current Access Point Identifier e.g. MAC address+ current IP address + current CGI (Cell Global Identifier) of associated GSM coverage)
- When the user disconnects from the UNC/GANC or de-registers from the UMA/GAN network (or is disconnected or de-registered e.g. after elapse of an UNC keep-alive timer), the UNC/GANC updates the location information about the user in the "UMA/GAN database" as follows :
   o "current UMA/GAN location information" about the user is copied into an "old UMA/GAN location information" together with the "time of leaving UMA/GAN coverage" (i.e. current date-time)
   o "current UMA/GAN location information" is erased.

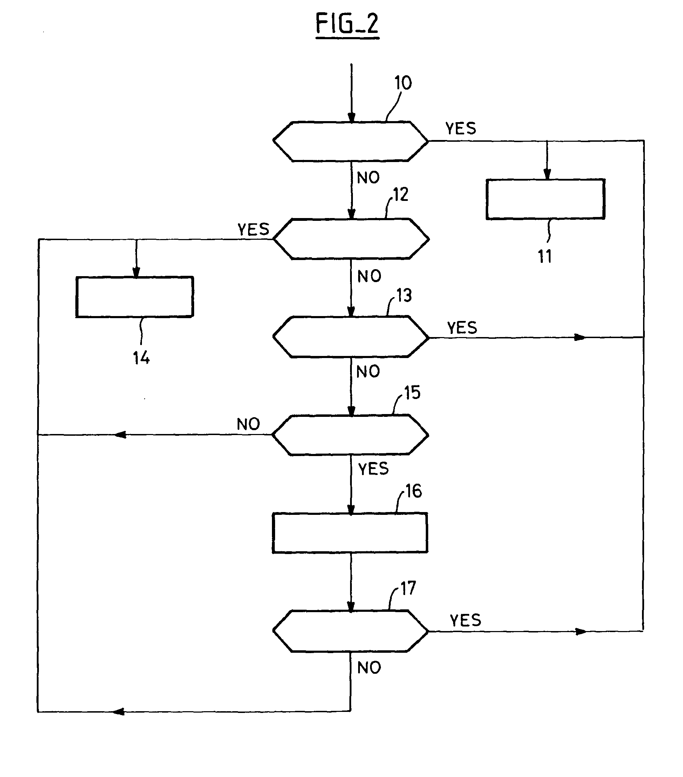

An example of algorithm for handling an incoming call targeted at the "fixed service" phone number of a "dual mode phone/subscription" is illustrated in figure 2, which will now be described.

When handling an incoming call targeted at the "fixed service" phone number of a "dual mode phone/subscription", it is determined whether the target user is "at home" or not.

For example, for determining whether the target user is "at home" or not, the service environment dealing with terminating calls/sessions looks up the UMA/GAN database record for the called user. Examples of service environment dealing with terminating calls/sessions include: CAMEL Service Control Point invoked by a GMSC (Gateway Mobile Switching Center) when the call is established via the CS domain, IMS application Server invoked by a S-CSCF (Serving- Call Session Control Function) as part of terminating service when the call is established via IMS.

Depending on whether the user is "at home" or not, the call is handled differently. This may for example be implemented in the following way.

In step 10, it is checked if "current UMA/GAN location information" contains an Access Point Identifier declared in the "Home low fee area" of the user.

If the answer in step 10 is yes, then the call is forwarded to "mobile service" number of the user and is routed per normal mobile procedures, as illustrated in step 11.

If the answer in step 10 is no, in step 12 it is checked if "current UMA/GAN location information" contains an Access Point Identifier not declared in the "Home low fee area"of the user.

If the answer in step 12 is yes, then the call is rejected or a service is provided in replacement (such as Call Forwarding services, e.g. forwarding to the voice-mail of the called party), as illustrated in step 14.

If the answer in step 12 is no, in step 13 it is checked if "old UMA/GAN location information" contains an Access Point Identifier in the "Home low fee area"of the user, and the duration elapsed since "time of leaving UMA/GAN coverage" is less than a threshold set by the operator (e.g. ¼ hour).

If the answer in step 13 is yes, then the incoming call targeted at the "fixed service" number of the user is forwarded to "mobile service" number of the user and is routed per normal mobile procedures, as illustrated in step 11.

If the answer in step 13 is no, it is checked in step 15 if the operator allows as "Home Zone" a set of mobile phone (e.g. GSM) cells surrounding the home(s) of the user, and "old UMA/GAN location information" is not empty, and "old UMA/GAN location information" contains an Access Point Identifier in the "Home low fee area"of the user.

If the answer in step 15 is no, the incoming call targeted at the "fixed service" number is rejected or a service is provided in replacement (such as Call Forwarding services, e.g. forwarding to the voice-mail of the called party), as illustrated in step 14.

If the answer in step 15 is yes, in step 16 the service environment issues a location request to get the location information of the user.

Then in step 17, it is checked if the user has been located on (e.g. GSM) cells declared by the operator as corresponding to his/her "Home" mobile area.

If the answer in step 17 is yes, then the call is re-directed to the "mobile service" number of the "dual mode phone" subscription. Then the call is handled per normal mobile procedures.

If the answer in step 17 is no, the call is rejected or a service is provided in replacement (such as Call Forwarding services, e.g. forwarding to the voice-mail of the called party), as illustrated in step 14, and "old UMA/GAN location information" is cleared.

This algorithm thus optimizes the number of Location Requests, as Location Requests are only issued when the user is no more (for more than a threshold (e.g. ¼ hour)) located on an Access Point Identifier in the "Home low fee area" and has not been detected as being far away from such "Home low fee area" through a previous Location Request.

Handling an incoming call targeted at a "mobile service" phone number of "dual mode phone/subscription" is relatively more simple and does not need to be more fully disclosed, as such a call is routed as per normal mobile procedures.

The present invention also has for its object a core network entity comprising means for carrying out a method according to the present invention.

The detailed implementation of the above-mentioned means does not raise any special problem for a person skilled in the art, and therefore such means do not need to be more fully disclosed than has been made above, by their function, for a person skilled in the art.

## Claims

1. A method for service delivery in a mobile communication system wherein mobile services can be delivered either via high fee mobile access or via low fee mobile or fixed access , said method comprising a step of :
- associating at least two phone numbers to an user having a single subscription for high fee and low fee mobile or fixed access, including a fixed service phone number, for which a calling party is charged with fixed network fees, and a mobile service phone number, for which a calling party is charged with mobile network fees.

2. A method according to claim 1, comprising a step of:
- upon handling an incoming call or session, targeted at a fixed service phone number, routing said call or session based on subscription policies to the called party according to mobile routing procedures.

3. A method according to any of claims 1 or 2, comprising the steps of :
- defining specific mobility states wherein an incoming call or session targeted at a fixed service number can be routed according to mobile routing procedures,
- upon handling an incoming call or session, targeted at a fixed service phone number, determining the current mobility state of the called party, and
- if said current mobility state corresponds to one of said specific mobility states, routing said call or session to the called party according to mobile routing procedures,
- if said current mobility state does not correspond to one of said specific mobility states, rejecting said call or session, or providing a service in replacement which does not need routing said call or session according to mobile routing procedures.

4. A method according to any of claims 1 to 3, comprising a step of:
- upon handling an outgoing call or session issued by an user having a single subscription for high fee and low fee mobile or fixed access, routing said call or session to the called party based on subscription policies according to fixed network fees.

5. A method according to claim 4, comprising the steps of:
- defining specific mobility states wherein an outgoing call or session can be routed according to fixed network fees,
- upon handling an outgoing, call or session, determining the current mobility state of the calling party, and,
- if said current mobility state corresponds to one of said specific mobility states, routing said call or session to the called party according to fixed network fees,
- if said current mobility state does not correspond to one of said specific mobility states, routing said call or session to the called party according to mobile network fees.

6. A method according to any of claims 3 to 5 , wherein said specific mobility states include at least one of the following states:
- a state where the user is known by the network as reachable through or registered on an area defined as Home low fee area,
- a state where the user has been de-registered from a Home low fee area, for less than a predetermined time,
- a state where the user is known by the network as reachable only through the high fee mobile access network, but in an area considered as equivalent to the Home low fee area in which the user was previously registered in the low fee mobile access network.

7. A method according to any of claims 3 to 6, wherein said step of determining a current user's mobility state includes interrogating a subscriber database storing user location related data.

8. A method according to any of claims 3 to 6, wherein said step of determining a current user's mobility state includes using Location Services to determine user location.

9. A method according to claim 8, wherein Location Services are used only when:
- the user is known as not being anymore reachable on a Home low fee area for more than a predetermined time,
- and has not been detected reachable through the high fee mobile access network in an area considered as out of the Home low fee area in which the user was previously registered in the low fee mobile access network.

10. A method according to any of claims 2 or 3 or 6 to 9, wherein said step of routing according to mobile routing procedures comprises the step of:
- forwarding said call to said mobile service phone number.

11. A method according to any of claims 1 to 10, comprising, for an user already having a fixed phone number for fixed access:
- a step of associating said fixed service phone number to said fixed phone number, by number portability,
- a step of, upon the reception of an incoming call or session targeted at said fixed number, considering said fixed phone number as ported onto said fixed service phone number.

12. A core network entity of a mobile communication system wherein mobile services can be delivered either via high fee mobile or via low fee mobile or fixed access, wherein at least two phone numbers are associated to an user having a single subscription for high fee and low fee mobile access, including a fixed service phone number, for which a calling party is charged with fixed network fees, and a mobile service phone number, for which a calling party is charged with mobile network fees, said core network entity comprising:
- means for, upon handling an incoming call or session, targeted at a fixed service phone number, routing said call or session based on subscription policies to the called party according to mobile routing procedures.

13. A core network entity according to claim 12, wherein, specific mobility states being defined wherein an incoming call or session targeted at a fixed service number can be routed according to mobile routing procedures, said core network entity comprises:
- means for, upon handling an incoming call or session, targeted at a fixed service phone number, determining the current mobility state of the called party, and
- means for, if said current mobility state corresponds to one of said specific mobility states, routing said call or session to the called party according to mobile routing procedures,
- means for, if said current mobility state does not correspond to one of said specific mobility states, rejecting said call or session, or providing a service in replacement which does not need routing said call or session according to mobile routing procedures.

14. A core network entity according to any of claims 12 or 13, comprising:
- means for, upon handling an outgoing call or session issued by an user having a single subscription for high fee and low fee mobile or fixed access, routing said call or session to the called party based on subscription policies according to fixed network fees.

15. A core network entity according to claim 14, wherein, specific mobility states being defined wherein an outgoing call or session can be routed according to fixed network fees, said entity comprises :
- means for, upon handling an outgoing, call or session, determining the current mobility state of the calling party, and,
- means for, if said current mobility state corresponds to one of said specific mobility states, routing said call or session to the called party according to fixed network fees,
- means for, if said current mobility state does not correspond to one of said specific mobility states, routing said call or session to the called party according to mobile network fees.

16. A core network entity according to any of claims 13 to 15 , wherein said specific mobility states include at least one of the following states:
- a state where the user is known by the network as reachable through or registered on an area defined as Home low fee area,
- a state where the user has been de-registered from a Home low fee area, for less than a predetermined time,
- a state where the user is known by the network as reachable only through the high fee cellular mobile access network, but in an area considered as equivalent to the Home low fee area in which the user was previously registered in the low fee mobile access network.

17. A core network entity according to any of claims 13 to 16, wherein said means for determining a current user's mobility state include means for interrogating a subscriber database storing user location related data.

18. A core network entity according to any of claims 13 to 16, wherein said means for determining a current user's mobility state include means for using Location Services to determine user location.

19. A core network entity according to claim 18, wherein means for using Location Services to determine user location comprise means for using Location Services only when :
- the user is known as not being anymore reachable on a Home low fee area for more than a predetermined time,
- and has not been detected reachable through the high fee mobile access network in an area considered as out of the Home low fee area in which the user was previously registered in the low fee mobile access network.

20. A core network entity according to any of claims 12 or 13 or 16 to 19, wherein said means for routing said call or session according to mobile routing procedures comprises:
- means for forwarding said call to said mobile service phone number.

21. A core network entity according to any of claims 12 or 13 or 16 to 20, comprising, for an user already having a fixed phone number for fixed access:
- means for associating said fixed service phone number to said fixed phone number, by number portability,
- means for, upon the reception of an incoming call or session targeted at said fixed phone number, porting said fixed phone number onto said fixed service phone number.
